# EUROPÄISCHE PATENTSCHRIFT

(11) **EP 0 355 524 B1**
(45) Veröffentlichungstag und Bekanntmachung des Hinweises auf die Patenterteilung: **02.03.1994**
(21) Anmeldenummer: 89114419.8
(22) Anmeldetag: 04.08.1989
(51) Int. Cl.: H01R 25/14, H01R 25/16

(54) **Leitungskanal**
Conduit
Canalisation pour câble

(30) Priorität: 25.08.1988 DE 8810746 U
(43) Veröffentlichungstag der Anmeldung: 28.02.1990
(73) Patentinhaber: REHAU AG + Co, 95111 Rehau (DE)
(72) Erfinder:

(56) Entgegenhaltungen:
- EP-A- 0 159 554
- CH-A- 653 180
- DE-U- 8 518 565
- FR-A- 2 488 064
- JOURNAL DE L'EQUIPEMENT ELECTRIQUE ET ELECTRONIQUE. no. 162, 21 Juli 1982, Paris FR, Seite 7 "un complement au système "ALPI""

## Beschreibung

Die Neuerung betrifft einen als Sockelleiste ausgebildeten Leitungskanal mit einem an der Wand befestigbaren Kanalunterteil und einer an diesem gehaltenen Abdeckung, wobei an beliebigen Stellen über jeweils einen Sockelleistentank stromführende Geräteeinsätze in die Sockelleiste einsetzbar sind.

Aus dem DE-U- 85 18 565 ist eine Kabelkanalanordnung mit einem Leitungsführungskanal und einer Aufputzgerätedose bekannt, welche insbesondere als Sockelleisten- oder Türrahmenkanal eingesetzt werden kann. Der Leitungsführungskanal ist beim bekannten Stand der Technik ein an der Wand befestigbares Unterteil mit mindestens einem Kanal für die Aufnahme von Kabeln, der einen an diesem Unterteil gehaltenen Deckel aufweist. Die Aufputzgerätedose besitzt eine an der Wand befestigbare, im wesentlichen flache Grundplatte und ein von dieser Grundplatte gehaltenes Oberteil, der das Unterteil übergreift und abdeckt. An der Grundplatte springt an einer dem Leitungsführungskanal zugewandten Unterkante mindestens eine flache Zunge vor, die in der Ebene einer Rückfläche der Grundplatte liegt. Im Unterteil des Leitungsführungskanals ist an der der Aufputzgerätedose zugesandten Seite eine der Zunge entsprechende Profilaussparung in der Ebene der Rückseite des Unterteils vorgesehen.

Der bekannte Stand der Technik hat den Nachteil, daß bei der Montage eines Gerätetanks neben der Befestigung der Sockelleiste zunächst eine Grundplatte an die Wand angeschraubt werden muß. Der dann montierte Geräteeinsatz wird ebenfalls über die Grundplatte mit der Wand verschraubt und die Abdeckung wird dann mittels Schrauben über diese Einheit festgelegt.

Die genannte Tankeinheit nach dem bekannten Stand der Technik kann für unterschiedlich hohe Sockelleisten verwendet werden. Zur Abdeckung der dabei in den Sockelleistenblenden entstehenden Ausnehmungen werden einzelne Abdeckschieber verwendet, die als Einzelteile in dafür vorgesehene Führungen einsetzbar sind.

Der bekannte Stand der Technik hat den Nachteil, daß mehrere Einzelteile verwendet werden müssen, um die Einheit zwischen Sockelleiste und Gerätetank herzustellen. Die Montage eines solchen Gerätetanks ist also aufwendig und muß in den Einzelteilen nacheinander erfolgen. Als insbesonders nachteilig wird angesehen, daß zunächst die Grundplatte an der Wand festgelegt werden muß, und daß erst danach die Abdeckung mit dem Geräteeinsatz mit dieser Grundplatte und damit auch mit der Wand verbunden werden kann. Hier setzt die Neuerung ein, die es sich zur Aufgabe gestellt hat, einen Sockelleistentank für einen als Sockelleiste ausgebildeten Leitungskanal anzugeben, bei dem die komplette Montage des Geräteeinbauteils außerhalb der Verbindung mit der Sockelleiste und ohne teilweise Festlegung an den zugeordneten Wandbereichen der Befestigungsebene erfolgen kann. Neuerungsgemäß wird dazu vorgeschlagen, daß der Sockelleistentank aus einem nach oben und vorn offenen, eine Geräteaufnahme bildenden Tankoberteil besteht, in dessen Aufnahmeraum ein Montageelement einsetzbar ist, welches aus einem Geräteträger, einem an diesem festgelegten, vormontierten, verdrahteten Geräteeinsatz und der die Tanköffnung verschließenden Tankabdeckung besteht, und daß der vordere Bereich der Tanköffnung nach dem Einsatz des Montageelementes mit einem Abdeckrahmen verschließbar ist.

Gegenüber dem Stand der Technik besitzt die neuerungsgemäße Ausführung den Vorteil, daß nur das Tankoberteil an der Wand verschraubt wird. Der komplett vormontierte und vorverkabelte Geräteträger mit all seinen Abdeckungen wird in das Tankoberteil von oben eingeschoben und zweckmäßigerweise über Rastverbindungen im Aufnahmeraum des Tankoberteils festgelegt.

Zur Trennung der einzelnen Potentiale der Sockelleiste mit ihren Leitungskanälen ist zwischen diesen und den übergreifenden Bereichen des Tankoberteils eine Potentialtrennplatte angeordnet. Zweckmäßigerweise weist die Potentialtrennplatte über Sollbruchstellen entfernbare seitliche Abdeckungen zum seitlichen Verschließen der Montageöffnung für den Sockelleistentank in der Abdeckung der Sockelleiste auf.

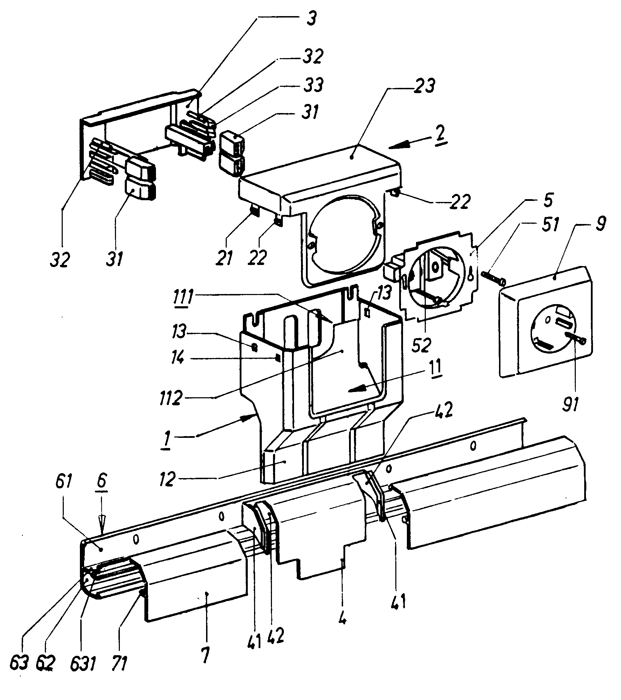

In der Zeichnung ist eine explosionsartige Zusammenstellung der Einzelteile des neuerungsgemäßen Einsatzes des Sockelleistentanks in die Sockelleiste schematisch dargestellt. Die Sockelleiste besteht hierbei aus einem Unterteil 6 und einer vorderen Abdeckung 7. Das Unterteil 6 zeigt in der dargestellten Ausführungsform zwei Leitungskanäle 61, 62 sowie einen am freien Ende mit einer U-förmigen Aufnahme 631 ausgebildeten Tragesteg 63. In die U-förmige Aufnahme 631 des Tragestegs 63 greift die Rastnase 71 der Abdeckung 7 ein und legt diese am Unterteil 6 fest. Die Potentialtrennplatte 4 wird in gleicher Weise auf das Unterteil 6 aufgerastet. An der Potentialtrennplatte 4 sind seitliche Abdeckungen 41 einstückig angeformt. Mit diesen seitlichen Abdeckungen wird die Montageöffnung für den Sockelleistentank in der Abdeckung 7 verschlossen. Diese Abdeckplatten 41 sind so ausgebildet, daß sie bei Verwendung eines kleinen Sockelleistenkanals das entstehende Loch zwischen der Abdeckung 7 und dem Tankoberteil 1 abdecken.

Bei Verwendung des großen Kanals werden die seitlichen Abdekkungen 41 einfach abgebrochen. Die Ausnehmung in der Abdeckung 7 wird in diesem Fall von den übergreifenden Bereichen 12 des Tankoberteils 1 übernommen. Das Tankoberteil 1 besitzt einen annähernd dreiseitig von Begrenzungswänden umschlossenen Aufnahmeraum 11, welcher zum Einsatz des Montageelementes dient. Dieses Montageelement besteht aus einem Geräteträger 3, einem an diesem festgelegten vormontierten verdrahteten Geräteeinsatz 5 und der die Tanköffnung 111 verschließenden Tankabdekkung 2. Der Geräteeinsatz 5 kann beispielsweise aus einer Schutzkontakt-Steckdose bestehen, die komplett vormontiert und verdrahtet in den Geräteträger 3 eingesetzt und mit der Tankabdeckung 2 verbunden wird. Die Verbindung dieser drei Elemente 2, 3, 5 erfolgt über die Schrauben 51, 52, die über entsprechende Aufnahmeöffnungen in den Einzelelementen 2, 3, 5 diese Einzelelemente aufeinander festlegen. Das vollständig vormontierte Montageelement wird danach in den Aufnahmeraum 11 des Tankoberteils 1 eingesetzt und mit dem Abdeckrahmen 9 über die zentrale Schraube 91 abschließend verschlossen. Der Einsatz des Montageelementes in den Aufnahmeraum 11 erfolgt über einfaches Verrasten, wobei am Deckelteil 23 der Tankabdeckung 2 nach außen gerichtete Rasthaken 21, 22 in entsprechende Aufnahmeöffnungen 13, 14 der Seitenwände des Tankoberteils 1 einrasten.

Nach Montage des Sockelleisten-Unterteils 6 und Verlegen der in der Zeichnung nicht dargestellten Kabel wird festgelegt, wo ein erfindungsgemäßer Sockelleistentank installiert werden soll. In diesem Bereich werden die verlegten Kabel mit der nötigen Längenzugabe abgeschnitten. Danach wird die Potentialtrennplatte 4 an der bezeichneten Stelle auf das Unterteil 6 aufgerastet und die abgelängten Kabel werden durch die dafür vorgesehenen Auslaßöffnungen im Bereich der seitlichen Abdeckungen 41 herausgeführt.

Danach wird die Abdeckung 7 auf das Unterteil 6 aufgerastet, so daß der Leitungskanal der Sockelleiste so weit abgedeckt ist, daß keine Kabel aus den Leitungskanälen 61, 62 herausrutschen oder sich überkreuzen können. An der Potentialtrennplatte 4 sind rechts und links Abdeckplatten 41 einstückig angeformt, die bei Verwendung des kleinen Sockelleistenkanals die entstehende Ausnehmung zwischen der Abdeckung 7 und dem Tankoberteil 1 abdecken. Bei Verwendung des großen Leitungskanals werden die Platten 41 abgebrochen. Danach wird das Tankoberteil durch eine Aussparung 42 in der Potentialtrennplatte auf das Unterteil 6 über einen oder mehrere in der Zeichnung nicht dargestellte Rasthaken aufgerastet und mit einer oder mehreren Schrauben an der Wand befestigt.

Der Geräteträger 3 ggf. mit Kabelsteckklemmen 31, der Geräteeinsatz 5, die Tankabdeckung 2 sowie der Abdeckrahmen 9 können in der Fabrik des Herstellers oder in der Werkstatt des Handwerkers vormontiert und vorverkabelt werden. In den Geräteträger werden dabei die ggf. benötigten Kabelsteckklemmen 31 an den dafür vorgesehenen Stellen eingerastet. Diese Stellen werden begrenzt durch elastische, rechteckige oder runde domartige Gebilde 32, wobei an mindestens zwei solcher domartigen Gebilde 32 Haltenasen 33 angeformt sind. Der Geräteeinsatz 5, der z.B. aus einer Steckdose, einem Telefonanschluß, einem Antennenanschluß usw. bestehen kann, wird vorverkabelt und zusammen mit der Tankabdeckung 2 auf den Geräteträger 3 geschraubt.

Danach wird der Abdeckrahmen 9 mit dem Geräteeinsatz 5 verschraubt. Diese komplett vormontierte Einheit wird mit den aus dem Tankoberteil 1 herausgeführten Kabeln verbunden, von oben in das Tankoberteil eingesteckt und durch die Rastverbindungen 21, 22, 13, 14 im Tankoberteil festgelegt.

Die Vorteile der neuerungsgemäßen Ausbildung In der Verbindung zwischen Sockelleistentank und Sockelleiste werden darin gesehen, daß der Geräteeinsatz vollständig vormontiert und vorverkabelt sein kann, und daß diese vormontierte Einheit im Tankoberteil lediglich durch Verrasten festgelegt werden kann. Dadurch wird die aufwendige Verschraubung vermieden. Ein weiterer Vorteil wird darin gesehen, daß die seitlichen Abdeckungen 41 an der Potentialtrennplatte 4 direkt einstückig angeformt sind. Dadurch wird das Einschieben loser Verschlußteile vermieden.

## Patentansprüche

1. Als Sockelleiste (6, 7) ausgebildeter Leitungskanal mit einem an der Wand befestigbaren Kanalunterteil (6) und einer an diesem gehaltenen Abdeckung (7), wobei an beliebigen Stellen über jeweils einen Sockelleistentank stromführende Geräteeinsätze (5) in die Sockelleiste (6, 7) einsetzbar sind, dadurch gekennzeichnet, daß der Sockelleistentank aus einem nach oben und vorn offenen, eine Geräteaufnahme bildenden Tankoberteil (1) besteht, in dessen Aufnahmeraum (11) ein Montageelement einsetzbar ist, welches aus einem Geräteträger (3), einem an diesem festgelegten, vormontierten, verdrahteten Geräteeinsatz (5) und der die Tanköffnung (111) verschließenden Tankabdeckung (2) besteht, und daß der vordere Bereich (112) der Tanköffnung (111) nach dem Einsatz des Montageelementes mit einem Abdeckrahmen (9) verschließbar ist.

2. Sockelleiste nach Anspruch 1, dadurch gekennzeichnet, daß das Montageelement über Rasthaken (21, 22) in Aufnahmeöffnungen (13, 14) des Tankoberteils (1) festgelegt ist.

3. Sockelleiste nach Anspruch 1, dadurch gekennzeichnet, daß zwischen den Leitungskanälen (61, 62) der Sockelleiste (6, 7) und den übergreifenden Bereichen (12) des Tankoberteils (1) eine Potentialtrennplatte (4) angeordnet ist.

4. Sockelleiste nach Anspruch 3, dadurch gekennzeichnet, daß die Potentialtrennplatte (4) über Sollbruchstellen entfernbare seitliche Abdeckungen (41) zum seitlichen Verschließen der Montageöffnung für den Sockelleistentank in der Abdekkung (7) der Sockelleiste (6, 7) aufweist.

## Claims

1. Cable trunking designed as a skirting trunking (6, 7) with a trunking lower section (6) which can be attached to the wall and a cover (7) mounted on the lower section, whereby current-carrying accessory frames (5) can be installed in the skirting trunking (6, 7) at any point with a skirting trunking tank, characterised in that the skirting trunking tank consists of a socket outlet housing (1) which is open to the top and front and which forms an accessory mounting into the mounting space (11) of which a mounting element can be inserted consisting of apparatus rack (3), a preassembled ready-wired accessory frame (5) attached to this rack and tank cover (2) which closes tank opening (111), and that the front area (112) of tank opening (111) can be sealed with a trim frame (9) after the insertion of the mounting element.

2. Skirting trunking in accordance with Claim 1, characterised in that the mounting element is held in mounting openings (13, 14) of socket outlet housing (1) by retaining hooks (21, 22).

3. Skirting trunking in accordance with Claim 1, characterised in that a cable separator (4) is arranged between ducts (61, 62) of the socket trunking (6, 7) and the surrounding areas (12) of socket outlet housing (1).

4. Skirting trunking in accordance with Claim 3, characterised in that the cable separator (4) has lateral covers (41) which can be removed at design breaking points for lateral closing of the mounting opening for the skirting trunking tank in cover (7) of the skirting trunking (6, 7).

## Revendications

1. Goulotte de distribution conçue comme une plinthe (6, 7) avec une partie inférieure (6) à fixer au mur et un recouvrement (7) fixé sur cette partie, des inserts (5) de l'appareil conducteurs de courant pouvant être disposés chacun à un emplacement quelconque par l'intermédiaire d'un réservoir de plinthe, caractérisée par le fait que le réservoir de plinthe est constitué d'une partie supérieure (1) ouverte vers le haut et vers l'avant, formant réception de l'appareil, dans l'évidement de réception (11) de laquelle un élément de montage peut être inséré, celui-ci étant constitué d'un support d'appareil (3), sur lequel est fixé un insert d'appareil (5) prémonté et câblé et d'un couvercle (2) fermant l'ouverture du réservoir (111) et que la zone avant (112) de l'ouverture du réservoir (111) peut être fermée par un cadre (9) après l'utilisation de l'élément de montage.

2. Plinthe selon la revendication 1, caractérisée par le fait que l'élément de montage est fixé par des crochets (21, 22) dans des évidements (13, 14) de la partie supérieure du réservoir (1).

3. Plinthe selon la revendication 1, caractérisée par le fait qu'une plaque de séparation de potentiel (4) est disposée entre les goulottes de distribution (61, 62) de la plinthe (6, 7) et les zones de recouvrement (12) de la partie supérieure du réservoir (1).

4. Plinthe selon la revendication 3, caractérisée par le fait que la plaque de séparation de potentiel (4) présente des plaques de recouvrement latérales (41), amovibles grâce à des points destinés à la rupture, assurant la fermeture latérale de l'ouverture de montage du réservoir de plinthe dans le recouvrement (7) de la plinthe (6, 7).
